# EUROPEAN PATENT SPECIFICATION

(11) **EP 2 447 817 B1**
(45) Date of publication and mention of the grant of the patent: **06.12.2017**
(21) Application number: 10186796.8
(22) Date of filing: 07.10.2010
(51) Int. Cl.: G06F 3/0481, G06F 3/0482, H04M 1/725

(54) **Method and apparatus for managing processing resources in a portable electronic device**
Verfahren und Vorrichtung zur Verwaltung der Verarbeitungsressourcen in einer tragbaren elektronischen Vorrichtung
Procédé et appareil pour gérer des ressources de traitement dans un dispositif électronique portable

(43) Date of publication of application: 02.05.2012
(73) Proprietor: BlackBerry Limited, Waterloo, ON N2K 0A7 (CA)
(72) Inventor: Stoev, Orlin, Vesselinov, Mississauga Ontario L4W 0B4 (CA); Brown, Michael, William, Mississauga Ontario L4W 0B4 (CA)
(74) Representative: MERH-IP Matias Erny Reichl Hoffmann Patentanwälte PartG mbB

(56) References cited:
- EP-A1- 1 777 611
- EP-A1- 1 956 473
- EP-A1- 1 976 240
- EP-A2- 1 748 630
- EP-A2- 2 136 290
- WO-A1-2008/132536
- WO-A2-02/10893
- US-A1- 2003 119 562
- US-A1- 2006 020 904
- US-A1- 2007 220 445
- US-A1- 2007 229 518
- US-A1- 2007 238 489
- US-A1- 2008 189 658
- US-A1- 2008 295 017
- US-A1- 2009 019 369
- US-A1- 2010 248 787

## Description

### FIELD

The specification relates generally to portable electronic devices, and specifically to a method and apparatus for managing processing resources in a portable electronic device.

### BACKGROUND

Applications running in the background on a portable electronic device drain processing resources causing the portable electronic device to appear sluggish and cause a battery in the portable electronic device to run down.

Document EP-1956473-A1 discloses a device where emphasis can be shifted from one icon list to another icon list at a display; for example, an icon can be a user profile application icon used to access a user profile application.

Document US-2007/238489-A1discloses a mobile communication device having a user interface for invoking a text editing command. The interface comprises a reduced set of commands accessed by actuating an input device, the reduced set of commands comprising a set of context-sensitive commands derived from a full-function set of commands associated with a text-based application.

Document EP-2136290-A2 discloses a mobile terminal including a display unit including a touch screen and enabled to receive an input command to view requested stored data on a display unit and to classify the requested stored data into at least first and second categories of data, each category of data including a common type of data, to control the display unit to display the at least first and second categories of data in lists that are parallel with each other, and to individually and separately control the lists of the first and second categories of data based on a touching action performed on one of lists of the first and second categories of data. However, there is no disclosure whatsoever of controlling applications by providing indications of applications in a banner region.

Document WO-2008/132536-A1 discloses a portable electronic device that is switchable between operational modes via actuation of a mode switch actuator. However, there is no disclosure whatsoever of controlling applications by providing indications of applications in a banner region.

Document US-2006/020904-A1 discloses a method for navigating information in a mobile terminal. The method includes displaying, on a graphical user interface of the mobile terminal, a plurality of window regions, wherein each region is a container for objects and provides an overview of features and functions of the terminal and a status of the terminal. A first user input selects of one of the regions and in response to the first user input, displaying at least one object corresponding to a selected region in a portion of the selected region. However, there is no disclosure whatsoever of controlling applications by providing indications of applications in a banner region.

US2010/248787A1 discloses techniques to implement a user interface for a display of a mobile device. The user interface may include a chromeless menu configured to be displayed when menu-based user input to the mobile device is available. A system tray is configured to be displayed on the display when a notice containing status information affecting operability of the mobile device is available. A task switcher module causes a chromeless overlay be displayed over an active application being executed by the mobile device to allow selection of one or more applications of the mobile device.

### SUMMARY

The present invention provides a method for managing processing resources in a portable electronic device in accordance to appended independent claim 1, a corresponding portable electronic device in accordance to appended independent claim 9 and a corresponding computer program product in accordance to appended independent claim 10. Embodiments are defined in the dependent claims.

### BRIEF DESCRIPTIONS OF THE DRAWINGS

Implementations are described with reference to the following figures, in which:
Fig. 1 depicts a portable electronic device enabled to management of processing resources, according to non-limiting implementations;
Fig. 2 depicts certain elements of the portable electronic device of Fig. 1, according to non-limiting implementations;
Fig. 3 depicts a method for managing processing resources, according to non-limiting implementations; and
Figs. 4 to 12 depict a graphic user interface for management of processing resources, according to non-limiting implementations.

### DETAILED DESCRIPTION OF THE IMPLEMENTATIONS

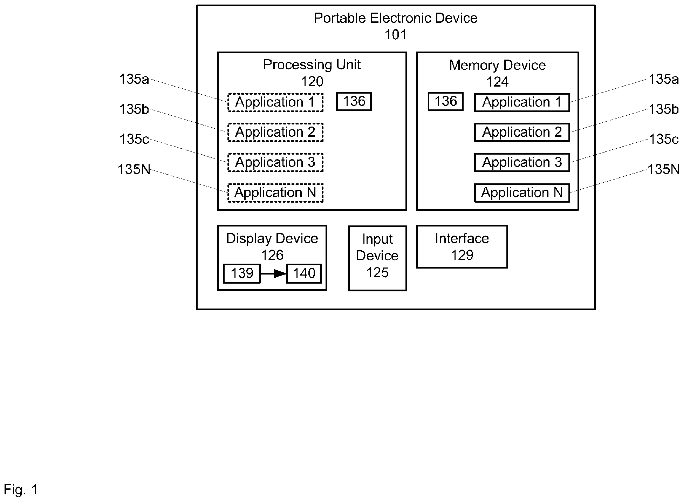

Fig. 1 depicts a portable electronic device 101, according to non-limiting implementations. Portable electronic device 101, which will also be referred to hereafter as device 101, comprises a processing unit 120 interconnected with a memory device 124, an input device 125, a display device 126 and an optional communication interface 129, for example via a computing bus (not depicted). Memory device 124, which will also be referred to as memory 124, stores applications 135a. 135b, 135c, 135N (collectively applications 135 and generically an application 135). Further, any suitable subset of applications 135 can be processed by processing unit 120, the subset of applications 135 running in the background: in other words, the subset of applications 135 are processed by processing unit 120 but are not viewable at display device 126. Display device 126 will also be referred to as display 126 hereafter. It is further appreciated that while four applications 135 are depicted as stored in memory 124 in Fig. 1, it is appreciated that any suitable number of applications 125 can be stored in memory 124 and that the subset of applications 135 processed by processing unit 120 in the background and can also be any suitable number.

Device 101 can further comprise an application 136 for managing processing resources. Application 136 can be stored in memory 124 and processed by processing unit 120. In particular processing of application 136 enables device 101 to at least one of: bring a given application 135 to the foreground such that the given application 135 is viewable at display 126; and close the given application 135 to reduce resources used by processing unit 120, as will be described below.

In general, device 101 comprises any suitable portable electronic device for processing applications, 135 136, including but not limited to any suitable combination of portable computing devices, mobile computing devices, laptop computing devices, portable electronic devices, mobile electronic devices, PDAs (personal digital assistants), cellphones, smartphones and the like. Other suitable portable electronic devices are within the scope of present implementations.

Processing unit 120 comprises any suitable processor, or combination of processors, including but not limited to a microprocessor, a central processing unit (CPU) and the like. Other suitable processing units are within the scope of present implementations.

Memory 124 can comprise any suitable memory device, including but not limited to any suitable one of, or combination of, volatile memory, non-volatile memory, random access memory (RAM), read-only memory (ROM), hard drive, optical drive, flash memory, magnetic computer storage devices (e.g. hard disks, floppy disks, and magnetic tape), optical discs, and the like. Other suitable memory devices are within the scope of present implementations. In particular, memory device 124 is enabled to store applications 135, 136.

Input device 125 is generally enabled to receive input data, and can comprise any suitable combination of input devices, including but not limited to a keyboard, a keypad, a pointing device, a mouse, a track wheel, a trackball, a touchpad, a touch screen and the like. Other suitable input devices are within the scope of present implementations.

Display device 126 comprises circuitry 139 for generating representations of data, for example a representation 140 of applications 135, 136, as will be described below. Display device 126 can include any suitable one of or combination of CRT (cathode ray tube) and/or flat panel displays (e.g. LCD (liquid crystal display), plasma, OLED (organic light emitting diode), capacitive or resistive touchscreens, and the like). Circuitry 139 can include any suitable combination of circuitry for controlling the CRT and/or flat panel displays etc., including but not limited to display buffers, transistors, electron beam controllers, LCD cells, plasmas cells, phosphors etc. In particular, display device 126 and circuitry 139 can be controlled by processing unit 120 to generate representation 140.

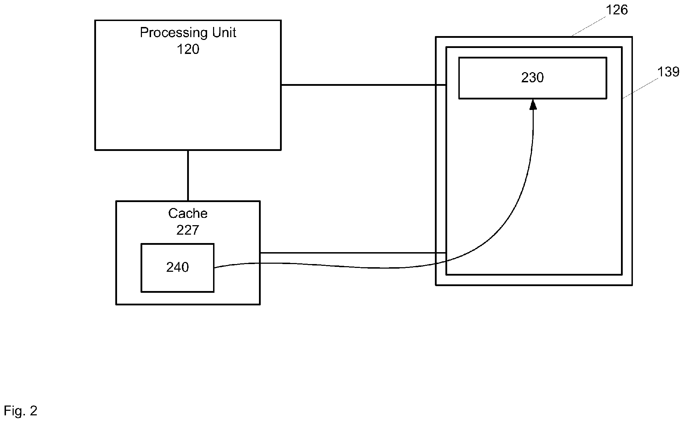

In particular, attention is directed to Fig.2 which depicts non-limiting implementations of display 126 and circuitry 139, in communication with processing unit 120 and a memory cache 227 (hereinafter cache 227). In some implementations, memory 124 can comprise cache 227, while in other implementations cache 227 can comprise a separate memory device. Furthermore, processing unit 120 is in communication with cache 227 and further enabled to control circuitry 139. In particular, processing unit is enabled to control an area 230 of circuitry 139 to indications of applications 135, as will be described below.

In implementations depicted in Fig. 2, it is appreciated that circuitry 139 and area 230 comprise, for example, transistors in a flat panel display; however, in other implementations, circuitry 139 can comprise a combination of an electron gun in a CRT, and area 230 can comprise phosphors in a CRT.

Communication interface 129, when present, comprises any suitable communication interface, or combination of communication interfaces. In particular communication interface 129 is enabled to communicate with via a network (not depicted), the network being wired and/or wireless as desired. Accordingly, communication interface 129 (which will also be referred to as interface 129 hereafter) is enabled to communicate according to any suitable protocol which is compatible with the network, including but not limited to wired protocols, USB (universal serial bus) protocols, serial cable protocols, wireless protocols, cell-phone protocols, wireless data protocols, Bluetooth protocols, NFC (near field communication) protocols and/or a combination, or the like. In some implementations, interface 129 can be enabled to communicate with remote computing devices (e.g. servers, other computing devices, other mobile electronic devices, etc.), via any suitable communication network according to any suitable protocol, including but not limited to packet based protocols, Internet protocols, analog protocols, PSTN (public switched telephone network) protocols, WiFi protocols, WiMax protocols and the like, and/or a combination. Other suitable communication interfaces and/or protocols are within the scope of present implementations.

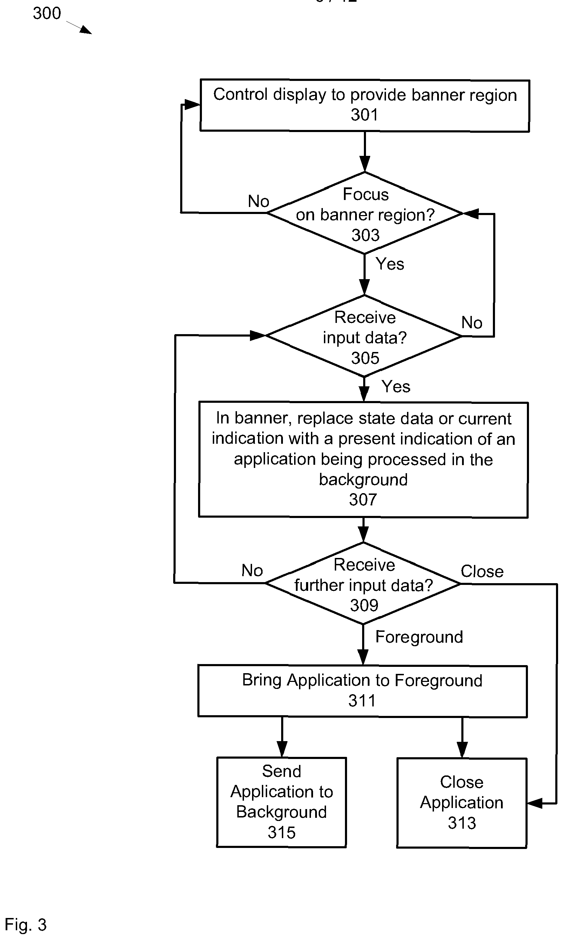

Attention is now directed to Fig. 3 which depicts a method 300 for managing processing resources in a portable electronic device. In order to assist in the explanation of method 300, it will be assumed that method 300 is performed using device 101. Furthermore, the following discussion of method 300 will lead to a further understanding of device 101 and its various components. However, it is to be understood that device 101 and/or method 300 can be varied, and need not work exactly as discussed herein in conjunction with each other, and that such variations are within the scope of present implementations.

In particular, it is appreciated that method 300 can be carried out at device 101 by processing application 136, and that application 136 can comprise method 300. It is yet further appreciated that each of the steps of method 300 are performed by processing unit 120.

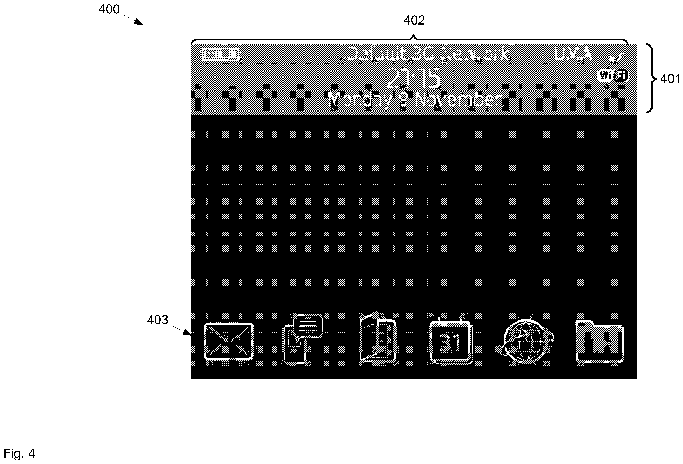

At 301, area 230 of display 126 is controlled to provide a banner region comprising device state data. For example, attention is directed to Fig. 4 which depicts a graphic user interface (GUI) 400 provided at display 126 which includes a banner region 401 and device state data 402. Device state data 402 can include, but is not limited to a battery indicator, network connectivity, a time, a date and the like. It is appreciated that absent from banner region 401 and GUI 400 are any indications of applications 135 that might be running in the background. It is further appreciated that GUI 400 can include indicators 403, such as icons etc., which when actuated cause an associated application to be opened and/or processed by processing unit 120.

Returning to Fig. 3, at 303, it is determined whether focus is on banner region 401. It is appreciated that focus indicates which component of GUI 400 is currently selected to receive input. For example, data can be received from input device 125 indicative that focus is on banner region 401. When focus is not on banner regions 401, 301 repeats until focus is on banner region 401. It is appreciated, however, that between 301 and 303, other processes can be performed at device 101. For example, applications can be opened and/or closed, or the like.

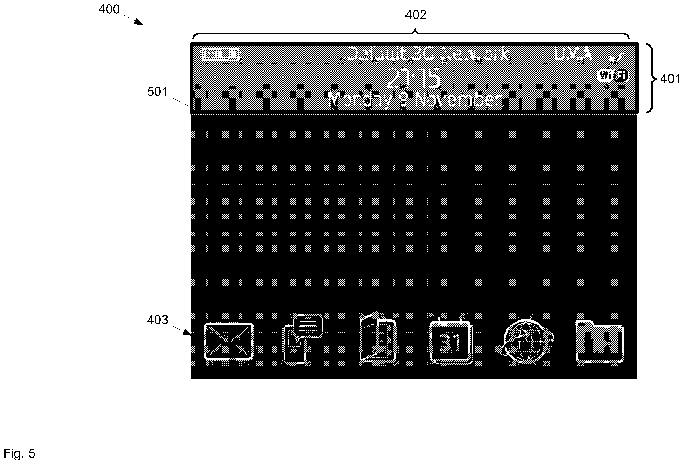

However, at 303, when focus is determined to be on banner region 401, focus on banner region 401 can be optionally visually indicated using any suitable method: for example, as depicted in Fig. 5 (similar to Fig. 4 with like elements having like numbers), focus is visually indicated using a box 501 around banner region 401. Alternatively, focus can be visually indicated by highlighting banner region 401, changing a colour, font or the like in banner region 401. Any other suitable method of indicating focus on banner region 401 is within the scope of present implementations. Further the method of indicating focus on banner regions 401 is not to be considered particularly limiting.

Again returning to Fig. 3, at 305, while focus is on banner region 301, input data is received from input device 125 that responsively triggers processing unit 120 to control display 126 to provide, in banner region 401, an indication of a first application 135a of applications 135. While in the present description, application 135a is designated as first application 135, it is appreciated that such a designation is merely exemplary and any of applications 135 can be designated as "first". Furthermore, at 307, the indication of first application 135a replaces the device state data 402 in banner region 401.

For example, when input device 125 comprises a touch screen device, the input data of 305 can comprise data received from the touch screen device indicative that a swipe has occurred in area 230 of display 126, for example a lateral swipe (i.e. from one side to the other side of display 126, across area 230). When input device 125 comprises a pointing device, the input data of 305 can comprise data received from pointing device indicative that a lateral actuation has occurred at the pointing device, e.g. substantially equivalent to a lateral swipe received from a touch screen.

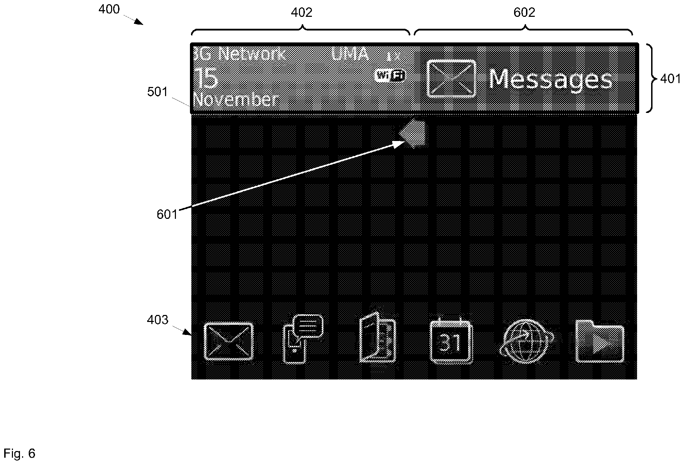

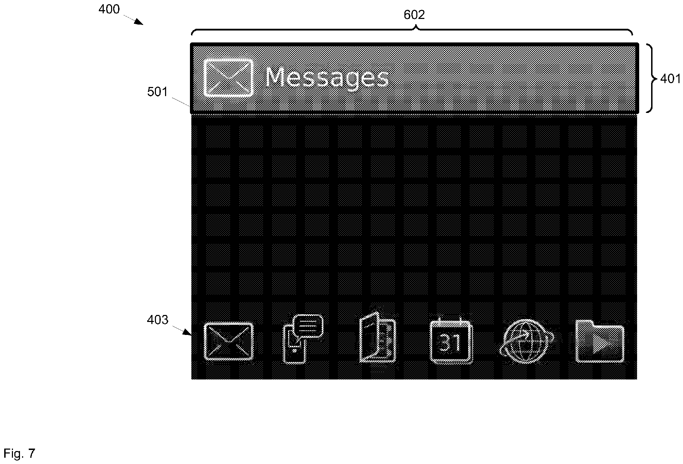

For example, attention is directed to Fig. 6, which is substantially similar to Fig. 4 with like elements having like numbers. It is appreciated that in Fig. 6, as represented by arrow 601 that input data has been received indicating a lateral swipe across area 230 in banner region 401, from a right side of display 126 to a left side of display 126. In response, device state data 402 is replaced with an indication 602 of first application 135a, which in depicted implementations is a message application. Hence, circuitry 139 in area 230 of display 126 is controlled to cause device state data 402 to move towards a first lateral edge of display 126 to further cause indication 602 to appear from a second lateral edge of display 126, second lateral edge opposite first lateral edge, replacing device state data 402 as it moves towards the first lateral edge. In other words, a sliding animation is provided in which display 126 is controlled in area 230 to replace device state data 402 with indication 602. The state of GUI 400 after indication 602 replaces device state data 402 is depicted in Fig. 7.

It is appreciated, however, that while a lateral swipe and a lateral sliding animation is provided in exemplary implementations, the method of replacing device state data 402 with indication 602 in banner region 401 is substantially non-limiting. For example the swipe could be in any suitable direction and/or the swipe could be replaced with a tap and/or click sequence, or the equivalent, using input device 125. Further the sliding animation could be replaced with device state data 402 fading into indication 602 and/or indication 602 replacing device state data 402 step wise and/or abruptly. Indeed, any suitable combination of suitable input data types and suitable replacement methods are within the scope of present implementations.

It is yet further appreciated that indication 602 can comprise at least one an icon indicative of first application 135a (e.g. an icon representative of envelope or any other suitable icon indicative of a message application) and text indicative of first application 135a (e.g. "Message", or any other suitable text).

Returning to Fig. 3, in some implementations, 305 can be repeated, such that next input data similar to the "swipe" input data described above can be received any suitable number of times; for each set of next input data received, a next indication of a next application 135 is provided, the next indication replacing a previous indication of a previous application 135 of the plurality of applications 135 and/or a subset of the applications 135 that are running in the background.

It is further appreciated that a decision occurs at 309 as to whether or not receipt of further data has occurred, the further data indicative that a present application 135 associated with a currently provided indication in banner region 401 is to be at least one of: brought to the foreground; and closed, as will be described below.

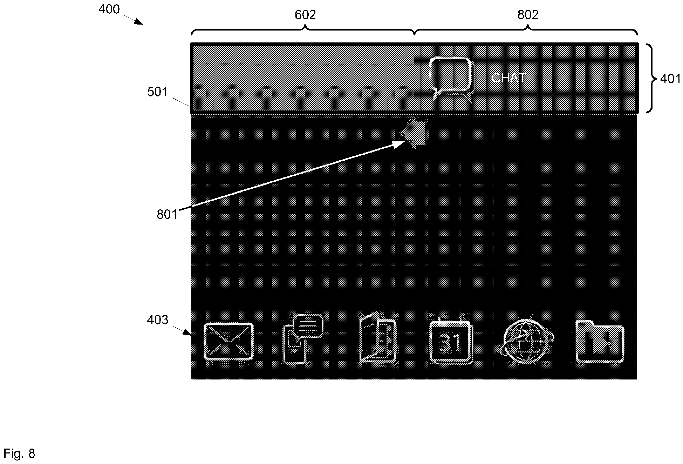

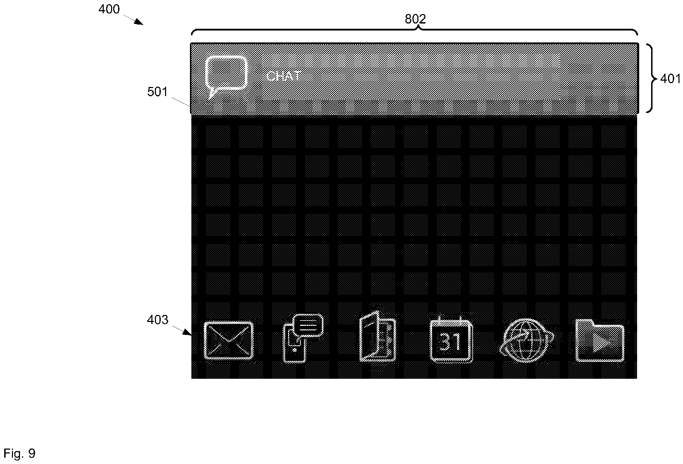

For example Fig. 8 depicts implementations where 305 repeats (i.e. the decision at 309 is "No"), and arrow 801 indicates that another swipe, or the like, has occurred at input device 125. Hence, indication 602 is replaced with indication 802 of application 135b, via the sliding animation. The state of GUI 400 after indication 802 replaces indication 602 is depicted in Fig. 9. As appreciated from Figs. 8 and 9, in exemplary implementations, application 135b comprises a chat application.

Repetition of steps 305 to 309 can continue indefinitely, cycling through applications 135 (i.e. the subset of applications 135 that are running in the background) until further input data is received at 309. In some instances, a swipe in a direction opposite arrows 601, 801 (i.e. left to right) cause an indication of a previous application 135 to be provided. Further, when an indication of a last application 135N is reached and another swipe is detected, then application 136 can cycle back to first application 135a.

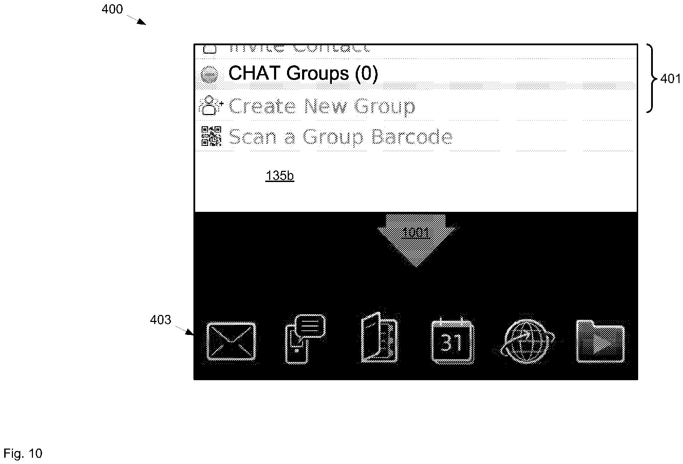

In any event, further data can comprise any suitable data indicative that a present application 135 associated with a presently provided indication, for example indication 802 in Figs. 8 and 9, is to be brought to the foreground and/or closed, as will be presently described. For example, as depicted in Fig. 10, which is substantially similar to Fig. 9, with like elements having like numbers, further data can comprise a swipe, or the equivalent, using input device 125, in a direction from the top to bottom of GUI 400 (e.g. top to bottom of display 126). Such a swipe, or the equivalent, is indicated by arrow 1001.

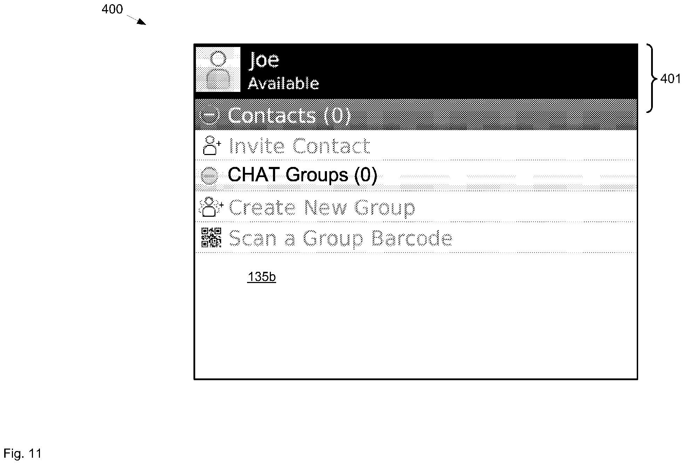

In exemplary implementations depicted in Figs 10 and 11 (Fig. 11 being substantially similar to Fig. 10 with like elements having like numbers), receipt of further data triggers at least one of several actions. In depicted implementations, application 135b associated with indication 802 is brought to the foreground by controlling display 126 to provide a representation of application 135b (e.g. at 311 in method 300): while non-limiting, in depicted implementations, this occurs via a sliding animation with a representation of application 135b sliding from top to bottom of GUI 400. For example, processing unit 120 controls circuitry 139 of display 126 to cause the representation of application 135b to scroll from banner region 401 to a bottom edge of display 126.

As appreciated from Figs 10 and 11, the representation of application 135b replaces banner region 401 and indicators 403 in a full screen mode (e.g. as in Fig. 11). From the representation of application 135b, application 135b the functionality of application 135b can be accessed via input device 125. In particular, application 135b can be closed such that resources used by processing unit 120 are reduced (e.g. 313 in method 300).

In some implementations, further input data can trigger application 135b to close (e.g. 313 in method 300).

In yet further implementations, a first type of further input data can cause application 135b to be brought to the foreground, while a second type of further input data can cause application 135b to close. For example, the swipe represented by arrow 1001 can cause application 135b to be brought to the foreground and a double tap on indicator 802 can cause the associated application 135b to close. However, any combination of further input data is within the scope of present implementations.

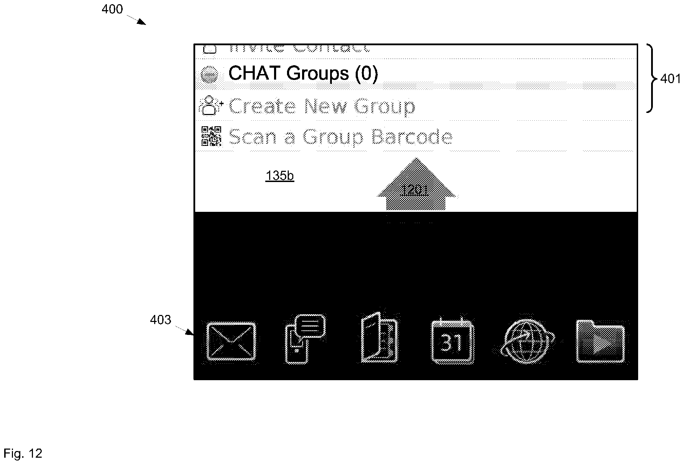

Attention is now directed to Fig. 12, which is substantially similar to Fig. 10 with like elements having like numbers. In these implementations, once the representation of application 135b has been brought to the foreground, additional input data can be received from input device 125 causing application 135b to be sent to the background and processing unit 120 can responsively control circuitry 139 to cause the representation of application 135b to scroll to banner region 401 (e.g. 315 of method 300). As represented by arrow 1201, the additional input data can comprise an upward swipe or the like. Indeed, by the representation of application 135b scrolling up into the banner region 401, it is appreciated that such an animation is indicative that application 135b has been accessed via banner region 401 and/or application 136.

It is further appreciated that the order in which indications of applications 135 are provided in 307 of method 300 is generally non-limiting as 305-309 are repeated. For example, indications of applications 135 can be provided in order in which applications 135 were initially processed, alphabetical order, an order of priority and/or any other suitable order. In some implementations, processing unit 120 can generate a list of applications 135 (e.g. a list of suitable identifiers of applications 135) (and/or update the list as applications 135 are opened or closed) and provide the indications of applications 135 by processing the list.

It is yet further appreciated that while method 300 was described with reference to application 135a as a first application and application 135b as a second application, the order in which indications of applications 135 are provided is generally non-limiting.

It is further appreciated that banner region 401 can be removed from display 126 after receiving further input data, for example at 311 of method 300, as depicted in Figs. 10-12. Alternatively, though not depicted, banner region 401 can remain at display 126 while the representation of a current application 135 is provided at 311.

In yet further implementations, banner region 401 can be removed from display 126 after a given time period (e.g. a few seconds or any other suitable time period) such that even though the representation of a current application 135 has been generated, next input data similar to the input data represented by arrows 601, 801, can be received during the given time period (e.g. further swipes occur in banner region 401). This causes a next indication of a next application 135 of the plurality of applications 135 to be provided in banner region 401. Hence, a next application 135 can be at least one of brought to the foreground and closed, a representation of a next application 135 replacing representation of the currently displayed application 135 when the next application 135 is brought to the foreground. The currently displayed application 135 is sent to the background. Hence, rather then scroll through indications of applications 135, the representations of applications 135 can be scrolled through and their functionality accessed.

Indeed, in some implementations, the representations of applications 135 can be provided along with associated indications in banner region 401 such that the representations of applications 135 can be scrolled through rather than just the associated indications.

Indeed, it is appreciated that any suitable method of scrolling through the applications using banner region 401 is within the scope of present implementations.

It is yet further appreciated that while method 300 was described with reference to indication 602 of application 135a replacing device state data 402 and indication 802 of application 135b replacing indication 802, before application 135b is brought to the foreground, method 300 can be described with reference to a first application 135 being brought to the foreground and/or closed. For example, method 300 can comprise (with reference to device 101):

controlling area 230 of display device 126 to provide banner region 401 comprising device state data 402, area 230 of display device 126 enabled to receive focus using input device 125 (e.g. 301 of method 300);

while focus is in banner region 401, receiving first input data, and responsively controlling display device 126 to provide in banner region 401 an indication of a first application 135, indication of first application 135 replacing device state data 402(e.g. 303 to 307 of method 300); and,

receiving further input data while indication of first application 135 is provided in banner region 401 (e.g. 309 of method 300) and, in response, at least one of:
bringing first application 135 to the foreground by controlling display device 126 to provide a representation of first application 135 (e.g. 311 of method 300); and
closing first application 135 such that resources used by processing unit 120 are reduced (e.g. 313 of method 300).

In addition, when more than one application 135 is running in the background, method 300 can further comprise:
prior to receiving further input data, successively receiving next input data similar to first input data, and for each set of next input data received, providing a next indication of a next application of plurality of applications 135, next indication replacing a previous indication of a previous application 135 of the plurality of applications 135; and
once further input data is received, at least one of:
bringing a present application 135 associated with a presently provided indication provided in banner region 401 to the foreground by controlling display 126 to provide a representation of the present application 135; and
closing the present application 135 such that resources used by processing unit are reduced.

In some implementations, in addition to applications 135 being run in the background, indications of commonly used applications (that may or may not be running in the background) can be provided at 307 of method 300. For example, device 101 can be provisioned with a list of applications that are appreciated to be commonly used, and indications of these commonly used applications can be scrolled through in banner region 401 in addition to applications 135 that are being processed in the background.

In any case, by providing an easy and convenient method to access and close applications being run in the background of a portable electronic device, the performance of the portable electronic device can be improved and the battery life of the portable electronic device extended.

Those skilled in the art will appreciate that in some implementations, the functionality of device 101 can be implemented using pre-programmed hardware or firmware elements (e.g., application specific integrated circuits (ASICs), electrically erasable programmable read-only memories (EEPROMs), etc.), or other related components. In other implementations, the functionality of device 101 can be achieved using a computing apparatus that has access to a code memory (not shown) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Alternatively, the computer-readable program code could be stored remotely but transmittable to these components via a modem or other interface device connected to a network (including, without limitation, the Internet) over a transmission medium. The transmission medium can be either a non-wireless medium (e.g., optical and/or digital and/or analog communications lines) or a wireless medium (e.g., microwave, infrared, free-space optical or other transmission schemes) or a combination thereof.

A portion of the disclosure of this patent document contains material which is subject to copyright protection. The copyright owner has no objection to the facsimile reproduction by any one the patent document or patent disclosure, as it appears in the Patent and Trademark Office patent file or records, but otherwise reserves all copyrights whatsoever.

Persons skilled in the art will appreciate that there are yet more alternative implementations and modifications possible for implementing the implementations, and that the above implementations and examples are only illustrations of one or more implementations. The scope, therefore, is only to be limited by the claims appended hereto.

## Claims

1. A method for managing processing resources in a portable electronic device (101) comprising a processing unit (120) interconnected with a display device (126), a memory device (124) and an input device (125), said processing unit (120) processing a plurality of applications, a subset of the applications (135) running in the background, whereby the subset of applications (135) are processed by the processing unit (120) but are not viewable at display device (126), a graphical user interface (GUI) (400) being provided at the display device (126), said method comprising:
controlling an area of said display device (126) to provide a banner region comprising device state data comprising at least one of a battery indicator, network connectivity, a time and a date, said area of said display device (126) enabled to receive focus using said input device (125), said focus indicating which component of the GUI (400) is currently selected to receive input;
while said focus is in said banner region, receiving first input data, and responsively controlling said display device (126) to provide in said banner region an indication of a first application from said subset of applications, said indication of said first application replacing said device state data in said banner region and comprising at least one of an icon indicative of said first application and text indicative of said first application; and,
receiving further input data while said indication of said first application is provided in said banner region and, in response, depending on the input data, execute any one of:
bringing said first application to the foreground by controlling said display device (126) to provide a representation of said first application; and
closing said first application such that resources used by said processing unit (120) are reduced; the method further comprising:
prior to receiving said further input data, successively receiving next input data similar to said first input data, and for each set of said next input data received, providing a next indication of a next application of said plurality of applications, said next indication replacing a previous indication of a previous application of said plurality of applications; and
once said further input data is received, at least one of:
bringing a present application associated with a presently provided indication provided in said banner region to the foreground by controlling said display device (126) to provide a representation of said present application; and
closing said present application such that said resources used by said processing unit (120) are reduced.

2. The method of claim 1, wherein said responsively controlling said display device (126) to provide in said banner region an indication of said first application comprises:
controlling circuitry in said area of said display device (126) to cause said device state data to move towards a first lateral edge of said display device (126); and,
controlling said circuitry to cause said indication to appear from a second lateral edge of said display device (126), said second lateral edge opposite said first lateral edge.

3. The method of any of claims 1 to 2, wherein said bringing said first application to the foreground by controlling said display device (126) to provide a representation of said first application comprises:
controlling circuitry of said display device (126) to cause said representation to scroll from said banner region to a bottom edge of said display device (126).

4. The method of claim 3, further comprising receiving additional input data causing said first application to be sent to the background and responsively controlling said circuitry to cause said representation to scroll to said banner region.

5. The method of any of claims 1 to 4, further comprising removing said banner region from said display device (126) after receiving said further input data.

6. The method of any of claims 1 to 5, wherein said banner region is removed from said display device (126) after a given time period such that next input data similar to said first input data can be received during said given time period causing a next indication of a next application of said plurality of applications to be provided in said banner region so that said next application can be at least one of brought to the foreground and closed, a representation of said next application replacing said representation of said first application when said next application is brought to the foreground.

7. The method of any of claims 1 to 6, wherein said input device (125) comprises at least one of a touch screen device and a pointing device and said first input data comprises at least one of:
data received from said touch screen device indicative that a lateral swipe has occurred in said area of said display device (126); and
data received from said pointing device indicative that a lateral actuation has occurred at said pointing device.

8. The method of any of claims 1 to 7, wherein said indication of said next application comprises at least one of an icon indicative of said first application and text indicative of said next application.

9. A portable electronic device (101) comprising:
a processing unit (120) interconnected with a display device (126), a memory device (124) and an input device (125), said processing unit (120) processing a plurality of applications in the background such that said plurality of applications are initially not viewable on said display device (126), said processing unit (120) configured to perform the steps of any of the methods of claims 1 to 8.

10. A computer program product, comprising a computer usable medium having a computer readable program code adapted to be executed to implement any of the steps of the method of claims 1 to 8.

## Patentansprüche

1. Verfahren zum Verwalten von Verarbeitungsressourcen in einer tragbaren elektronischen Vorrichtung (101), die eine Verarbeitungseinheit (120) aufweist, die mit einer Anzeigevorrichtung (126), einer Speichervorrichtung (124) und einer Eingabevorrichtung (125) verbunden ist, wobei die Verarbeitungseinheit (120) eine Vielzahl von Anwendungen verarbeitet, wobei ein Teilsatz der Anwendungen (135) im Hintergrund läuft, wobei der Teilsatz von Anwendungen (135) durch die Verarbeitungseinheit (120) verarbeitet wird, aber an der Anzeigevorrichtung (126) nicht sichtbar ist, wobei eine graphische Benutzerschnittstelle (GUI - graphical user interface) (400) an der Anzeigevorrichtung (126) vorgesehen ist, wobei das Verfahren aufweist:
Steuern eines Bereichs der Anzeigevorrichtung (126), um einen Bannerbereich vorzusehen, der Vorrichtungszustandsdaten aufweist, die zumindest eines aus einem Batterieindikator, einer Netzwerkkonnektivität, einer Zeit und einem Datum aufweisen, wobei der Bereich der Anzeigevorrichtung (126) aktiviert ist zum Empfangen eines Fokus unter Verwendung der Eingabevorrichtung (125), wobei der Fokus angibt, welche Komponente der GUI (400) aktuell ausgewählt ist zum Empfangen einer Eingabe;
während der Fokus in dem Bannerbereich ist, Empfangen erster Eingabedaten und in Reaktion darauf Steuern der Anzeigevorrichtung (126), um in dem Bannerbereich eine Angabe einer ersten Anwendung aus dem Teilsatz von Anwendungen vorzusehen, wobei die Angabe der ersten Anwendung die Vorrichtungszustandsdaten in dem Bannerbereich ersetzt und zumindest eines aus einem Symbol, das die erste Anwendung angibt, und einem Text aufweist, der die erste Anwendung angibt; und
Empfangen weiterer Eingabedaten, während die Angabe der ersten Anwendung in dem Bannerbereich vorgesehen ist, und in Reaktion, abhängig von den Eingabedaten, Ausführen eines aus:
Bringen der ersten Anwendung in den Vordergrund durch Steuern der Anzeigevorrichtung (126), um eine Repräsentation der ersten Anwendung vorzusehen; und
Schließen der ersten Anwendung derart, dass die von der Verarbeitungseinheit (120) verwendeten Ressourcen reduziert werden;
wobei das Verfahren weiter aufweist:
vor dem Empfangen der weiteren Eingabedaten, sukzessives Empfangen nächster Eingabedaten ähnlich zu den ersten Eingabedaten, und für jeden Satz der nächsten empfangenen Eingabedaten, Vorsehen einer nächsten Angabe einer nächsten Anwendung der Vielzahl von Anwendungen, wobei die nächste Angabe eine vorherige Angabe einer vorherigen Anwendung der Vielzahl von Anwendungen ersetzt; und
sobald die weiteren Eingabedaten empfangen sind, zumindest eines aus:
Bringen einer aktuellen Anwendung, die mit einer aktuell vorgesehenen Angabe assoziiert ist, die in dem Bannerbereich vorgesehen ist, in den Vordergrund durch Steuern der Anzeigevorrichtung (126), um eine Repräsentation der aktuellen Anwendung vorzusehen; und
Schließen der aktuellen Anwendung derart, dass die von der Verarbeitungseinheit (120) verwendeten Ressourcen reduziert werden.

2. Das Verfahren gemäß Anspruch 1, wobei das Steuern, in Reaktion, der Anzeigevorrichtung (126) zum Vorsehen einer Angabe der ersten Anwendung in dem Bannerbereich aufweist:
Steuern einer Schaltung in dem Bereich der Anzeigevorrichtung (126), um zu veranlassen, dass die Vorrichtungszustandsdaten hin zu einem ersten lateralen Rand der Anzeigevorrichtung (126) bewegt werden; und Steuern der Schaltung, um zu veranlassen, dass die Angabe von einem zweiten lateralen Rand der Anzeigevorrichtung (126) erscheint, wobei der zweite laterale Rand gegenüber dem ersten lateralen Rand ist.

3. Das Verfahren gemäß einem der Ansprüche 1 bis 2, wobei das Bringen der ersten Anwendung in den Vordergrund durch Steuern der Anzeigevorrichtung (126), um eine Repräsentation der ersten Anwendung vorzusehen, aufweist:
Steuern einer Schaltung der Anzeigevorrichtung (126), um zu veranlassen, dass die Repräsentation von dem Bannerbereich zu einem unteren Rand der Anzeigevorrichtung (126) scrollt.

4. Das Verfahren gemäß Anspruch 3, das weiter aufweist ein Empfangen zusätzlicher Eingabedaten, die veranlassen, dass die erste Anwendung in den Hintergrund gesendet wird, und in Reaktion, Steuern der Schaltung, um zu veranlassen, dass die Repräsentation zu dem Bannerbereich scrollt.

5. Das Verfahren gemäß einem der Ansprüche 1 bis 4, das weiter ein Entfernen des Bannerbereichs von der Anzeigevorrichtung (126) nach dem Empfangen der weiteren Eingabedaten aufweist.

6. Das Verfahren gemäß einem der Ansprüche 1 bis 5, wobei der Bannerbereich von der Anzeigevorrichtung (126) nach einer gegebenen Zeitdauer entfernt wird derart, dass nächste Eingabedaten ähnlich zu den ersten Eingabedaten während der gegebenen Zeitdauer empfangen werden können, wodurch veranlasst wird, dass eine nächste Angabe einer nächsten Anwendung der Vielzahl von Anwendungen in dem Bannerbereich vorgesehen wird, so dass die nächste Anwendung zumindest eines aus in den Vordergrund gebracht und geschlossen werden kann, wobei eine Repräsentation der nächsten Anwendung die Repräsentation der ersten Anwendung ersetzt, wenn die nächste Anwendung in den Vordergrund gebracht wird.

7. Das Verfahren gemäß einem der Ansprüche 1 bis 6, wobei die Eingabevorrichtung (125) zumindest eine aus einer Berührungsbildschirmvorrichtung und einer Zeigevorrichtung aufweist und die ersten Eingabedaten zumindest eines aufweisen aus:
Daten, die von der Berührungsbildschirmvorrichtung empfangen werden, die angeben, dass ein laterales Wischen in dem Bereich der Anzeigevorrichtung (126) stattgefunden hat; und
Daten, die von der Zeigevorrichtung empfangen werden, die angeben, dass eine laterale Betätigung an der Zeigevorrichtung stattgefunden hat.

8. Das Verfahren gemäß einem der Ansprüche 1 bis 7, wobei die Angabe der nächsten Anwendung zumindest eines aufweist aus einem Symbol, das die erste Anwendung angibt, und einem Text, der die erste Anwendung angibt.

9. Tragbare elektronische Vorrichtung (101), die aufweist:
eine Verarbeitungseinheit (120), die mit einer Anzeigevorrichtung (126), einer Speichervorrichtung (124) und einer Eingabevorrichtung (125) verbunden ist, wobei die Verarbeitungseinheit (120) eine Vielzahl von Anwendungen im Hintergrund verarbeitet derart, dass die Vielzahl von Anwendungen anfangs auf der Anzeigevorrichtung (126) nicht sichtbar ist, wobei die Verarbeitungseinheit (120) konfiguriert ist zum Durchführen der Schritte gemäß einem der Verfahren der Ansprüche 1 bis 8.

10. Computerprogrammprodukt, das ein computerverwendbares Medium mit einem computerlesbaren Programmcode aufweist, der ausgebildet ist, ausgeführt zu werden zum Implementieren der Schritte des Verfahrens gemäß den Ansprüchen 1 bis 8.

## Revendications

1. Procédé de gestion de ressources de traitement dans un dispositif électronique portable (101) comprenant une unité de traitement (120) interconnectée avec un dispositif d'affichage (126), un dispositif de mémoire (124) et un dispositif d'entrée (125), ladite unité de traitement (120) traitant une pluralité d'applications, un sous-ensemble des applications (135) s'exécutant en arrière-plan, moyennant quoi le sous-ensemble d'applications (135) sont traitées par l'unité de traitement (120) mais ne sont pas visualisables sur le dispositif d'affichage (126), une interface utilisateur graphique (GUI) (400) étant fournie sur le dispositif d'affichage (126), ledit procédé comprenant le fait :
de commander une zone dudit dispositif d'affichage (126) pour fournir une région de bandeau comprenant des données d'état de dispositif comprenant au moins l'un parmi un indicateur de batterie, une connectivité de réseau, une heure et une date, ladite zone dudit dispositif d'affichage (126) pouvant recevoir la cible de saisie en utilisant ledit dispositif d'entrée (125), ladite cible de saisie indiquant quel composant de la GUI (400) est actuellement sélectionné pour recevoir une entrée ;
lorsque ladite cible de saisie est dans ladite région de bandeau, de recevoir des premières données d'entrée, et de commander réactivement ledit dispositif d'affichage (126) pour fournir dans ladite région de bandeau une indication d'une première application à partir dudit sous-ensemble d'applications, ladite indication de ladite première application remplaçant lesdites données d'état de dispositif dans ladite région de bandeau et comprenant au moins l'un parmi une icône indiquant ladite première application et un texte indiquant ladite première application ; et
de recevoir des données d'entrée supplémentaires lorsque ladite indication de ladite première application est fournie dans ladite région de bandeau et, d'exécuter réactivement, en fonction des données d'entrée, l'une quelconque des étapes consistant :
à ramener ladite première application au premier plan en commandant ledit dispositif d'affichage (126) pour fournir une représentation de ladite première application ; et
à fermer ladite première application de sorte que les ressources utilisées par ladite unité de traitement (120) soient réduites ;
le procédé comprenant en outre le fait :
avant de recevoir lesdites données d'entrée supplémentaires, de recevoir successivement des données d'entrée suivantes similaires auxdites premières données d'entrée, et pour chaque ensemble desdites données d'entrée suivantes reçues, de fournir une indication suivante d'une application suivante de ladite pluralité d'applications, ladite indication suivante remplaçant une indication précédente d'une application précédente de ladite pluralité d'applications ; et
une fois que les données d'entrée supplémentaires sont reçues, d'exécuter au moins une étape consistant :
à ramener une application actuelle associée à une indication actuellement fournie dans ladite région de bandeau au premier plan en commandant ledit dispositif d'affichage (126) pour fournir une représentation de ladite application actuelle ; et
à fermer ladite application actuelle de sorte que lesdites ressources utilisées par ladite unité de traitement (120) soient réduites.

2. Procédé de la revendication 1, dans lequel le fait de commander réactivement ledit dispositif d'affichage (126) pour fournir dans ladite région de bandeau une indication de ladite première application comprend le fait :
de commander des circuits dans ladite zone dudit dispositif d'affichage (126) pour provoquer le déplacement desdites données d'état de dispositif vers un premier bord latéral dudit dispositif d'affichage (126) ; et
de commander lesdits circuits pour provoquer l'apparition de ladite indication à partir d'un deuxième bord latéral dudit dispositif d'affichage (126), ledit deuxième bord latéral étant opposé audit premier bord latéral.

3. Procédé de l'une des revendications 1 et 2, dans lequel le fait de ramener ladite première application au premier plan en commandant ledit dispositif d'affichage (126) pour fournir une représentation de ladite première application comprend le fait :
de commander les circuits dudit dispositif d'affichage (126) pour provoquer le défilement de ladite représentation de ladite région de bandeau vers un bord inférieur dudit dispositif d'affichage (126).

4. Procédé de la revendication 3, comprenant en outre le fait de recevoir des données d'entrée supplémentaires provoquant l'envoi de ladite première application vers l'arrière-plan et de commander réactivement lesdits circuits pour provoquer le défilement de ladite représentation vers ladite région de bandeau.

5. Procédé de l'une des revendications 1 à 4, comprenant en outre le fait de retirer ladite région de bandeau dudit dispositif d'affichage (126) suite à la réception desdites données d'entrée supplémentaires.

6. Procédé de l'une des revendications 1 à 5, dans lequel ladite région de bandeau est retirée dudit dispositif d'affichage (126) après une période donnée de sorte que des données d'entrée suivantes similaires auxdites premières données d'entrée puissent être reçues pendant ladite période donnée provoquant la fourniture d'une indication suivante d'une application suivante de ladite pluralité d'applications dans ladite région de bandeau de sorte que ladite application suivante puisse soit être ramenée au premier plan soit fermée, une représentation de ladite application suivante remplaçant ladite représentation de ladite première application lorsque ladite application suivante est ramenée au premier plan.

7. Procédé de l'une des revendications 1 à 6, dans lequel ledit dispositif d'entrée (125) comprend au moins l'un parmi un dispositif à écran tactile et un dispositif de pointage et lesdites premières données d'entrée comprennent au moins l'une parmi :
des données reçues à partir dudit dispositif à écran tactile indiquant qu'un glissement latéral a eu lieu dans ladite zone dudit dispositif d'affichage (126) ; et
des données reçues à partir dudit dispositif de pointage indiquant qu'un actionnement latéral a eu lieu au niveau dudit dispositif de pointage.

8. Procédé de l'une des revendications 1 à 7, dans lequel ladite indication de ladite application suivante comprend au moins l'un parmi une icône indiquant ladite première application et un texte indiquant ladite application suivante.

9. Dispositif électronique portable (101) comprenant :
une unité de traitement (120) interconnectée avec un dispositif d'affichage (126), un dispositif de mémoire (124) et un dispositif d'entrée (125), ladite unité de traitement (120) traitant une pluralité d'applications en arrière-plan de sorte que ladite pluralité d'applications soient initialement non visualisables sur ledit dispositif d'affichage (126), ladite unité de traitement (120) étant configurée pour effectuer les étapes de l'un des procédés des revendications 1 à 8.

10. Produit de programme informatique, comprenant un support utilisable par ordinateur ayant un code de programme lisible par ordinateur adapté pour être exécuté pour mettre en oeuvre l'une des étapes du procédé des revendications 1 à 8.
